(19) Europäisches Patentamt
European Patent Office
Office européen des brevets

(11) **EP 2 394 071 B1**

(12) **EUROPEAN PATENT SPECIFICATION**

(45) Date of publication and mention
of the grant of the patent:
**26.06.2013 Bulletin 2013/26**

(51) Int Cl.:
***F16D 48/06*** *(2006.01)*

(21) Application number: **10704425.7**

(22) Date of filing: **27.01.2010**

(86) International application number:
**PCT/JP2010/051460**

(87) International publication number:
**WO 2010/090196 (12.08.2010 Gazette 2010/32)**

(54) **CLUTCH OPERATING POSITION LEARNING APPARATUS**

KUPPLUNGSBETÄTIGUNGSPOSITIONSLERNVORRICHTUNG

APPAREIL D'APPRENTISSAGE DE POSITION D'ACTIONNEMENT D'EMBRAYAGE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **09.02.2009 JP 2009027675**

(43) Date of publication of application:
**14.12.2011 Bulletin 2011/50**

(73) Proprietor: **TOYOTA JIDOSHA KABUSHIKI
KAISHA
Toyota-shi,
Aichi-ken, 471-8571 (JP)**

(72) Inventors:
• **MATSUNAGA, Akio
Toyota-shi,
Aichi-Ken 471-8571 (JP)**

• **YOSHIHARA, Masatomo
Toyota-shi,
Aichi-Ken 471-8571 (JP)**
• **TAKAMOTO, Satoshi
Toyota-shi,
Aichi-Ken 471-8571 (JP)**
• **MASUDA, Satoshi
Kariya-shi,
Aichi-Ken 448-8661 (JP)**

(74) Representative: **Winter, Brandl, Fürniss, Hübner,
Röss, Kaiser, Polte - Partnerschaft
Alois-Steinecker-Strasse 22
85354 Freising (DE)**

(56) References cited:
**WO-A1-2008/028817      WO-A1-2008/145645
WO-A2-98/46908          DE-A1-102006 006 064
US-A- 5 411 124**

**Description**

The present invention relates to a clutch operating position learning apparatus that learns an operating position of a clutch operating member operated to switch a clutch mechanism, which is arranged between an output shaft of an internal combustion engine and an input shaft of a transmission, from one operating state to another.

Vehicles such as automobiles have an internal combustion engine serving as a drive source and a transmission having a plurality of gears. Normally, the vehicles include a clutch mechanism and a clutch operating member (for example, a clutch pedal). The clutch mechanism switches a power transmission state between an output shaft of the engine and an input shaft of the transmission between a power transmitting state and a disconnecting state. The clutch operating member is operated to switch the operating state of the clutch mechanism. When the clutch operating member is operated to switch gears of the transmission, the operating state of the clutch mechanism temporarily becomes a disengaged state, which is the state disconnecting the power transmission between the output shaft of the engine and the input shaft of the transmission through the clutch mechanism. After the transmission is switched from one gear to another, the clutch operating member is operated to return the operating state of the clutch mechanism to an engaged state, which is the state permitting the power transmission between the output shaft of the engine and the input shaft of the transmission through the clutch mechanism.

Recently, in order to save fuel consumed by internal combustion engines, automatic stop/start control apparatuses have been proposed and put to practical use. An automatic stop/start control apparatus automatically stops operation of an engine of a vehicle when the vehicle stops at, for example, a crossing, and automatically starts the engine when the vehicle starts. In order to improve the effect of reducing the fuel consumption by the engine in the vehicle equipped with the automatic stop/start control apparatus, it is desirable to stop operation of the engine at the earliest possible stage after the operating state of the clutch mechanism is changed from the engaged state to the disengaged state so as to stop the engine automatically. To achieve this goal, it is necessary to accurately obtain the operating position of the clutch operating member at the time when the operating state of the clutch mechanism is switched from the disengaged state to the engaged state, which is the clutch off point.

It is preferable to accurately obtain the clutch off point not only in the vehicle having the automatic stop/start control apparatus, but also in a vehicle that controls its operation with reference to the operating position of a clutch operating member (which is, for example, a movable portion of an actuator for actuating a clutch mechanism), such as a vehicle that automatically switches the operating state of the clutch mechanism.

The clutch off point is changed by changes over time of the clutch mechanism, such as wear of a friction plate. Accordingly, when a procedure related to automatic stopping of the engine operation is carried out based on a predetermined clutch off point, the procedure cannot be executed at a suitable time if the clutch mechanism has changed over time.

To solve this problem, Japanese Laid-Open Patent Publication JP 9-112587 A proposes an apparatus for learning the clutch off point.

After the operating state of the clutch mechanism is switched from the disengaged state to the engaged state, the load acting on the output shaft of the engine correspondingly increases in a rapid manner. This lowers the rotational speed of the output shaft (the engine speed). Using this phenomenon, the apparatus of the aforementioned document learns the clutch off point.

Specifically, after the clutch operating member is operated to change the operating state of the clutch mechanism from the disengaged state to the engaged state when the engine speed is maintained substantially constant, the operating position of the clutch operating member at the time when the engine speed has dropped in a predetermined manner is detected and learned as a learning value of the clutch off point.

In the vehicle with the clutch mechanism arranged between the output shaft of the engine and the input shaft of the transmission, the configuration of the vehicle causes a small delay in decrease of the engine speed after the operating state of the clutch mechanism has been actually switched from the disengaged state to the engaged state through operation of the clutch operating member. The operating position of the clutch operating member changes also during this delay.

Accordingly, as in the case of the apparatus described in the aforementioned document, if the clutch off point is learned when it is determined that the engine speed has dropped in the predetermined manner, the operating position of the clutch operating member that is offset from the actual clutch point by the amount corresponding to the change of the operating position in the aforementioned delay is learned as the learning value of the clutch off point. This lowers the learning accuracy of the clutch off point.

WO 2008/028817 A1 discloses a learning apparatus of an operating position of a clutch operating member operated to switch an operating state of a clutch mechanism arranged between an input shaft of a transmission having a plurality of gears and an output shaft of an internal combustion engine. The apparatus comprises a detection means for detecting the operating position of the clutch operating member, and a learning means for learning, as a learning value, a clutch off point. The learning means learns the clutch off point based on a drop time, which is a time at which the rotational speed of the output shaft drops in a predetermined manner when the clutch operating member is being operated, and the operating position of the clutch operating member.

WO 2008/145645 relates to a method and a device for controlling a clutch for transmitting torque between a drive engine and a transmission, wherein significant points on the clutch path being allocated to the clutch. A clutch path coordinate system determined in a learning process and comprising clutch path points which are at least relevant for starting is monitored by checking the point of engagement of the clutch, and the system is corrected if a change is detected and is otherwise used unchanged.

It is an objective of the present invention to provide a clutch operating position learning apparatus that allows accurate learning of a clutch off point.

To achieve the foregoing objective and in accordance with one aspect of the present invention, a learning apparatus of an operating position of a clutch operating member is provided as defined in claim 1, or any one of the dependent claims. The apparatus includes detection means for detecting the operating position of the clutch operating member and learning means for learning, as a learning value, a clutch off point. The clutch off point is the operating position of the clutch operating member at a time point at which the operating state of the clutch mechanism is switched from a disengaged state to an engaged state on condition that operation of the clutch operating member has been started so as to change the operating state of the clutch mechanism from the disengaged state to the engage state when a rotational speed of the output shaft is stable. The learning means learns the clutch off point based on a drop time, which is a time at which the rotational speed of the output shaft drops in a predetermined manner when the clutch operating member is being operated, the operating position of the clutch operating member detected by the detection means when the clutch operating member is being operated, and an indicator value of a changing speed of the operating position of the clutch operating member when the clutch operating member is being operated.

BRIEF DESCRIPTION OF THE DRAWINGS

Fig. 1 is a diagram schematically showing the configuration of a vehicle employing a clutch operating position learning apparatus according to a first embodiment of the present invention;

Fig. 2 is a flowchart representing the steps of a learning procedure according to the first embodiment;

Fig. 3 is a timing chart representing an example of the execution of the learning procedure;

Fig. 4 is a flowchart representing the steps of a learning procedure according to a second embodiment which is not covered by the claims;

Fig. 5 is a flowchart representing the steps of the learning procedure;

Fig. 6 is a graph representing an example of the relationship among a reference value, a count value of a rotation drop counter, and a learning value; and

Fig. 7 is a flowchart representing the steps of a forcible change procedure of a modification of each embodiment.

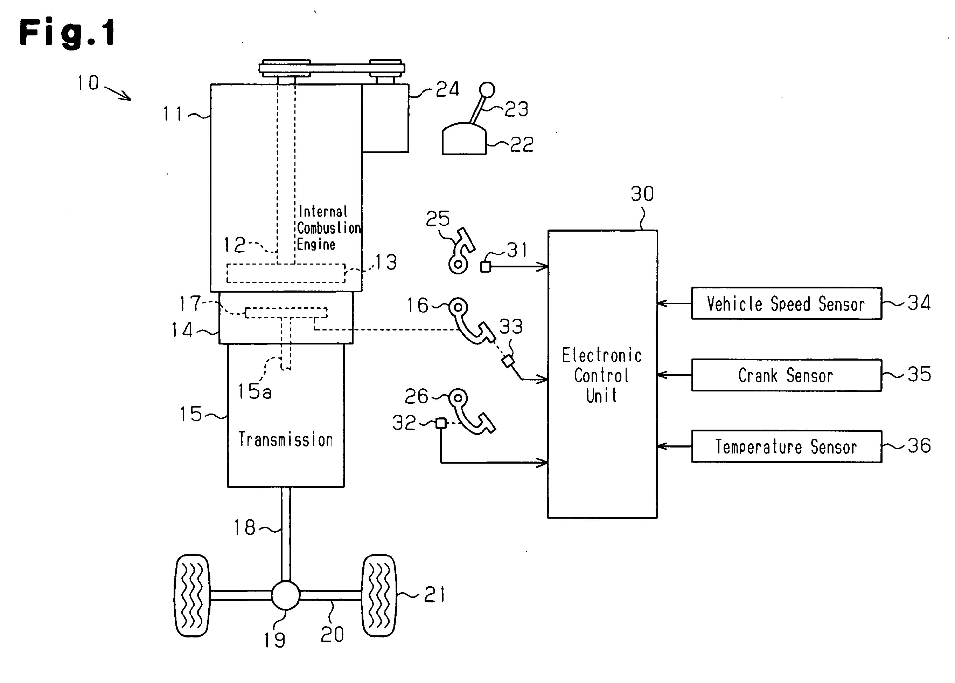

A clutch operating position learning apparatus according to a first embodiment of the present invention will now be described with reference to Figs. 1 to 3.

Fig. 1 shows the schematic configuration of a vehicle employing the clutch operating position learning apparatus according to the first embodiment.

As shown in Fig. 1, a vehicle 10 includes an internal combustion engine 11 serving as a drive source. A flywheel 13 is attached to a crankshaft 12, which is the output shaft of the engine 11, in an integrally rotatable manner. A transmission 15 is connected to the flywheel 13 through a clutch mechanism 14.

The clutch mechanism 14 is a dry type single plate friction clutch, which is publicly known. The clutch mechanism 14 selectively permits and stops transmission of rotational torque produced by the crankshaft 12 of the engine 11 to an input shaft 15a of the transmission 15, and operates in the manner described below.

When a clutch pedal 16, which is a clutch operating member, is not depressed, a clutch disk 17 of the clutch mechanism 14 is pressed firmly by the flywheel 13 of the engine 11. In this state, the flywheel 13 and the clutch disk 17 rotate integrally through the friction between the flywheel 13 and the clutch disk 17. The operating state of the clutch mechanism 14, at this stage, is a state in which the clutch mechanism 14 permits transmission of power between the crankshaft 12 of the engine 11 and the input shaft 15a of the transmission 15, that is, a fully engaged state.

Contrastingly, when the clutch pedal 16 is depressed, the clutch disk 17 moves separately from the flywheel 13, thus decreasing the frictional force produced between the flywheel 13 and the clutch disk 17. This causes the flywheel 13 and the clutch disk 17 to rotate separately while sliding on each other, and transmission of rotation of the flywheel 13 to the clutch disk 17 is eventually stopped. In this state, the operating state of the clutch mechanism 14 is switched first to a half-engaged state in which the clutch mechanism 14 transmits a small amount of power between the crankshaft 12 of the engine 11 and the input shaft 15a of the transmission 15 and then to a disengaged state in which such transmission of the power is stopped.

The transmission 15 is a parallel gear type manual transmission, for example, with five forward gears and one reverse gear. The transmission 15 has the input shaft 15a and a non-illustrated output shaft. The input shaft 15a of the transmission 15 is connected to the clutch disk 17. The output shaft of the transmission 15 is connected to drive wheels 21 through a driveshaft 18, a differential gear 19, and an axle 20. Rotation torque produced by the output shaft of the transmission 15 is transmitted to the drive wheels 21 through the driveshaft 18, the differential gear 19, and the axle 20.

The transmission 15 has a plurality of pairs of transmission gear trains (gears) and a plurality of sleeves. A shift device 22, which is manipulated to switch the gears of the transmission 15, is mounted in the vicinity of the driver's seat of the vehicle 10. The shift device 22 has a shift lever 23 that is movable along a non-illustrated shift gate. When the shift lever 23 is manipulated, the sleeves of the transmission 15 move in the axial direction of the output shaft of the transmission 15. This causes engagement of gears, thus permitting power transmission in a corresponding transmission gear train.

The vehicle 10 has a starter motor 24, which generates rotational torque. The starter motor 24 is actuated when the engine 11 is started. The rotational force produced by the starter motor 24 is transmitted to the crankshaft 12. Starting of the engine 11 is assisted through actuation of the starter motor 24.

Various types of sensors and switches are arranged in the vehicle 10 in order to detect the operating state of the vehicle 10 and the operating state of the engine 11. Specifically, an accelerator pedal position sensor 31, a brake switch 32, and a clutch pedal position sensor 33 (detection means) are arranged in correspondence with the driver's seat of the vehicle 10. The accelerator pedal position sensor 31 detects the depression amount, which is the operating position (the accelerator operating position ACC), of an accelerator pedal 25. The brake switch 32 detects whether a brake pedal 26 is depressed. The clutch pedal position sensor 33 detects the depression amount, which is the operating position (the clutch operating position CR), of the clutch pedal 16. The vehicle 10 has a vehicle speed sensor 34, which detects the traveling speed (the vehicle speed SPD) of the vehicle 10. The engine 11 has a crank sensor 35 and a temperature sensor 36. The crank sensor 35 detects the rotational speed of the crankshaft 12 (the engine speed NE). The temperature sensor 36 detects the temperature of the coolant water (the coolant water temperature THW).

An electronic control unit 30 constituted mainly by a microcomputer receives detection signals from the sensors 34, 35, 36 and the switches, and performs various types of calculation procedures based on the signals. The electronic control unit 30 carries out various types of control based on the obtained calculation results.

As one of the various types of control, the electronic control unit 30 performs idle speed control (ISC). Through the ISC, when the engine 11 is idling, the engine speed NE is adjusted to the lowest possible engine speed (a target speed Tne) under such conditions that stable operation of the engine 11 is maintained. In the ISC, the target speed Tne is calculated based on the coolant water temperature THW. Further, the amount of the air drawn into the cylinders of the engine 11 and the amount of the fuel combusted in the cylinders are adjusted in correspondence with the difference between the target speed Tne and the engine speed NE. This minimizes noise of the engine and fuel consumption by the engine while maintaining the stable operation of the engine 11 when the engine 11 is idling.

The vehicle 10 has an automatic stop-start function. Specifically, through this function, the engine 11 is automatically stopped when the vehicle 10 stops, for example, at a crossing. The engine is re-started at a certain time when the engine 11 is in an automatically stopped state, permitting the vehicle 10 to start. Employing the automatic stop-start function, the fuel consumption and emission of the engine 11 are decreased.

As another one of the various types of control, the electronic control unit 30 performs automatic stop/start control, through which the aforementioned automatic stop/start function is exerted. In the automatic stop/start control, when the engine 11 is in operation and the conditions (A) to (E) described below are all satisfied, the electronic control unit 30 determines that an automatic stop condition is met. The electronic control unit 30 then suspends supply of the fuel to the engine 11, for example, thus stopping the operation of the engine 11.

(A) The vehicle speed SPD is lower than or equal to a predetermined speed (for example, several kilometers per hour).
(B) The accelerator pedal 25 is not depressed.
(C) The brake pedal 26 is depressed.
(D) The clutch operating position CR is a position corresponding to a depression amount of the clutch pedal 16 exceeding a predetermined value.
(E) There is no history indicating that automatic stopping of the engine 11 has been carried out after the above-described conditions (A) to (D) are all met.

Afterwards, when any one of the conditions (A) to (D) becomes unsatisfied while the engine 11 is maintained in an automatically stopped state, the electronic control unit 30 determines that a restart condition is satisfied and performs a procedure for restarting the engine 11. Specifically, the starter motor 24 is actuated to carry out cranking of the engine 11 and engine control such as fuel injection control, which is publicly known, is performed so that the engine 11 is started.

In this automatic stop/start control, if the automatic stop condition is satisfied at the moment when the condition (D) is met, or if the restart condition is satisfied at the moment when the condition (D) becomes unsatisfied, the time at which the engine 11 is automatically stopped and the time at which the engine 11 is restarted are set based on a clutch off point. The clutch off point is the operating position of the clutch pedal 16 at the time point when the operating state of the clutch mechanism 14 is changed from the disengaged state to the engaged state. In the automatic stop/start control, specifically, when the engine 11 is to be automatically stopped, the operation of the engine 11 is stopped at the earliest possible time after the operating position of the clutch pedal 16 reaches the clutch off point. When the engine 11 is to be restarted, the engine 11 is started at an optimal time corresponding to the moment when the operating position of the clutch pedal 16 reaches the clutch off point, in other words, at the most retarded possible time under such conditions that starting performance of the vehicle 10 is ensured sufficiently. This allows stopping of the operation of the engine 11 for longest possible period of time, effectively decreasing the fuel consumption and the emission of the engine 11.

The clutch off point changes when the clutch mechanism 14 changes over time, such as when the clutch disk 17, which is the friction plate of the clutch mechanism 14, is worn. Accordingly, in the present embodiment, a clutch off point learning procedure (a learning procedure) is executed to accurately obtain the clutch off point.

If the operating position of the clutch pedal 16 reaches the clutch off point when the clutch pedal 16 is operated to switch the operating state of the clutch mechanism 14 from the disengaged state to the engaged state, the load acting on the crankshaft 12 of the engine 11 rapidly increases, thus causing a drop in the engine speed NE afterwards. By taking advantage of this phenomenon, in the present embodiment, learning of a learning value GK1 of the clutch off point is executed.

However, when the operating state of the clutch mechanism 14 of the vehicle 10 is changed from the disengaged state to the engaged state through operation of the clutch pedal 16, the configuration of the vehicle 10 causes a small delay in the drop of the engine speed NE after the operating position of the clutch pedal 16 has actually reached the clutch off point. The clutch operating position CR changes also in this delay. Assume that the clutch operating position CR detected at the time at which the engine speed NE has dropped with respect to a reference speed by a predetermined amount (a drop time) is learned and memorized as the learning value GK1 of the clutch off point. In this case, the operating position of the clutch pedal 16 that is offset from the actual clutch off point by the amount corresponding to the change amount of the clutch operating position CR in the delay is learned as the learning value GK1.

The delay, which is the period from the moment when the operating position of the clutch pedal 16 actually reaches the clutch off point to the aforementioned drop time, is varied depending on the speed at which the clutch operating position CR changes. Accordingly, it is possible to determine the delay based on the changing speed of the clutch operating speed CR.

As a result, in the present embodiment, by learning the clutch off point in the manner described below, the clutch off point is learned accurately. Specifically, first, change of the clutch operating position CR at the time when the clutch pedal 16 is being operated is memorized and the period corresponding to the aforementioned delay, which is a trace back period, is determined based on the changing speed of the clutch operating position CR. Then, with reference to the change of the clutch operating position SR stored in the electronic control unit 30, the clutch operating position CR at a time traced back from the aforementioned drop time by the amount corresponding to the trace back period is identified. The electronic control unit 30 then learns and memorizes the obtained clutch operating position CR as the learning value GK1 of the clutch off point.

This allows accurate determination of the clutch operating position CR that is detected at the time traced back from the drop time by the amount corresponding to the delay, that is, the time at which the clutch operating position CR actually reached the clutch off point. The clutch operating position CR is thus learned as the learning value GK1.

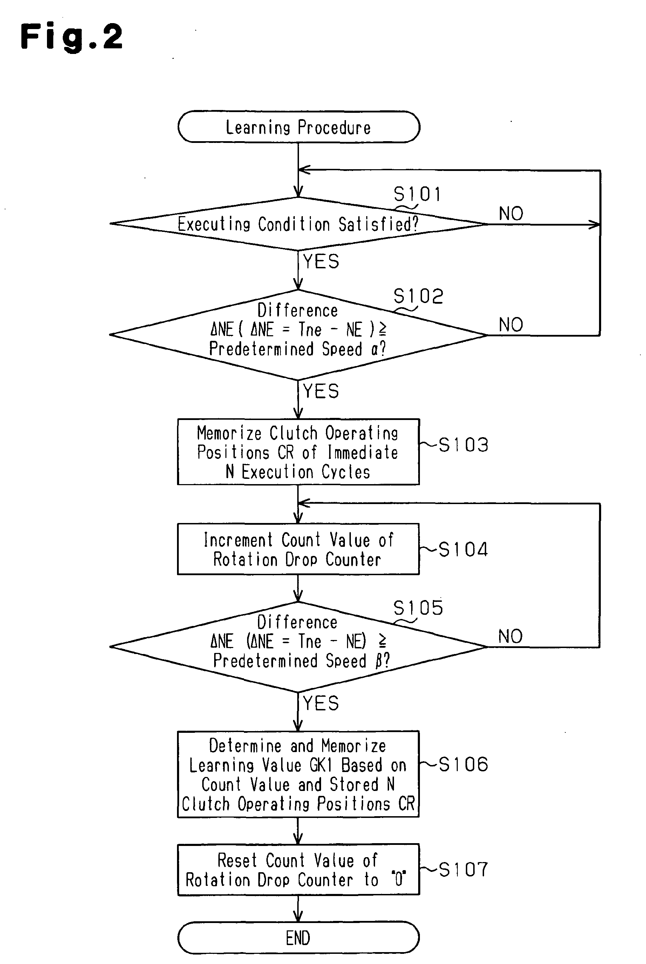

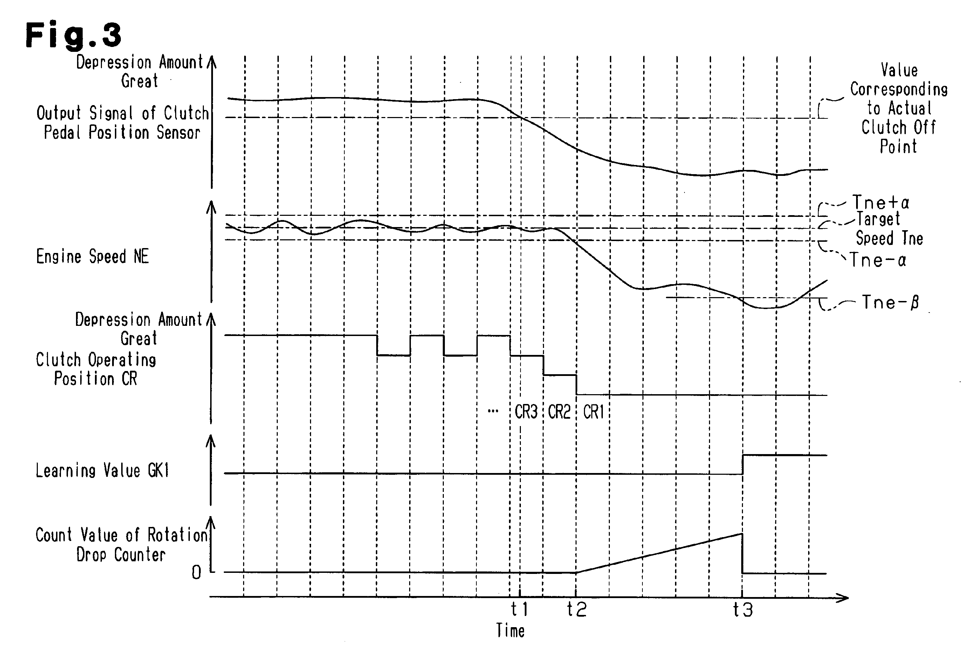

A learning procedure according to the first embodiment will hereafter be explained in detail with reference to Figs. 2 and 3.

Fig. 2 is a flowchart representing the steps of the learning procedure. The series of procedure illustrated in this flowchart schematically represents the steps of the learning procedure. The actual procedure is executed by the electronic control unit 30 as interrupt processing at predetermined cycles. Fig. 3 is a timing chart representing an example of an operating mode of the learning procedure. In Fig. 3, the broken lines represent the times at which the learning procedure is carried out in the first embodiment.

The learning procedure of the first embodiment is started with determination whether an executing condition is satisfied in step S101 of Fig. 2. It is determined that the executing condition is satisfied if both conditions (a), (b), which will be described below, are met.

(a) The absolute value of the difference between the engine speed NE and the target speed Tne has been maintained less than a first predetermined speed $\alpha$ (which is, for example, several tens of rotations per minute) continuously for a predetermined period (for example, several seconds).

(b) The clutch operating position CR is an operating position corresponding to a depression amount of the clutch pedal 16 greater than a predetermined value (the predetermined value is a depression amount of the clutch pedal 16 greater than the amount corresponding to the clutch off point).

When the executing condition is not satisfied (NO in step S101), steps S102 to S107 are not performed.

If the executing condition is met (YES in step S101), it is determined whether the difference $\Delta NE$ ($\Delta NE = Tne - NE$) between the target speed Tne and the engine speed NE has become greater than or equal to the first speed $\alpha$ (step S102). When the difference $\Delta NE$ is less than the first speed $\alpha$ (NO in step S102), that is, the current time is before the time point t2 of Fig. 3, steps S103 to S107 are not carried out.

When the difference $\Delta NE$ becomes greater than or equal to the first speed $\alpha$ (YES in step S102) after the present procedure is repeatedly executed, that is, when the current time corresponds to the time point t2 of Fig. 3, clutch operating positions CR (CR1, CR2, CR3..., CRN) that have been detected in immediate N cycles (for example, several cycles) of the procedure are stored by the electronic control unit 30 (step S103 of Fig. 2). Also, the count value of a rotation drop counter is incremented (step S104). The initial value of the count value is "0".

In the following period (from the time point t2 to the time point t3 of Fig. 3) until the difference $\Delta NE$ becomes greater than or equal to a second predetermined speed $\beta$ (which is, for example, several tens of rotations per minute, $\beta > \alpha$), the count value of the rotation drop counter is incremented repeatedly (step S104 of Fig. 2) each time the present procedure is carried out. In this manner, as the count value of the rotation drop counter, the value corresponding to the drop amount of the engine speed NE in a predetermined period immediately after the time point by which the engine speed has been dropped in the predetermined manner (which is, specifically, the period from when the difference $\Delta NE$ becomes greater than or equal to the first speed $\alpha$ to when the difference $\Delta NE$ becomes greater than or equal to the second value $\beta$) is calculated. In the present embodiment, the count value is used as an indicator value of the changing speed of the clutch operating position CR.

As has been described, in the learning procedure, the indicator value of the changing speed of the clutch operating position CR is used as a value for determining the period (the aforementioned delay) from when the operating position of the clutch pedal 16 reaches the clutch off point to when the difference $\Delta NE$ becomes greater than or equal to the first speed $\alpha$. To improve learning accuracy of the learning value GK1, it is desirable to use the value corresponding to the changing speed of the clutch operating position CR at the time when the clutch operating position CR reaches the clutch off point as the indicator value of the changing speed of the clutch operating position CR.

The greater the operating speed of the clutch pedal 16 at the time when the clutch operating position CR reaches the clutch off point, the greater the speed at which the engagement force produced by the clutch mechanism 14 increases becomes. Accordingly, the drop amount of the engine speed NE immediately after the clutch operating position CR has reached the clutch off point becomes greater. In the present embodiment, the aforementioned delay is determined accurately by using the count value of the rotation drop counter, which is the value corresponding to the drop amount of the engine speed NE, that is, the value highly correlated with the operating speed of the clutch pedal 16 at the time when the clutch operating position CR reaches the clutch off point. This ensures accurate learning of the learning value GK1 of the clutch off point.

When the operating state of the clutch mechanism 14 is switched from the disengaged state to the engaged state, the operating speed of the clutch pedal 16 is inconstant in many cases. For example, the clutch pedal 16 may be operated at a comparatively high speed until the clutch operating position CR reaches the clutch off point but at a comparatively low speed once the clutch operating position CR reaches the clutch off point. Accordingly, even though the changing speed of the clutch operating position CR is obtained, the changing speed is highly likely a value that is correlated with the aforementioned delay only to a limited extent. If the changing speed of the clutch operating position CR is used directly in learning of the learning value GK1, the learning accuracy of the learning value GK1 may decrease. However, in the first embodiment, the delay is determined accurately by using the count value of the rotation drop counter, which is highly correlated with the operating speed of the clutch pedal 16 at the time when the clutch operating position CR reaches the clutch off point. This ensures accurate learning of the learning value GK1 of the clutch off point.

Afterwards, when the difference $\Delta NE$ becomes greater than or equal to the second speed $\beta$ (YES in step S105) after the present procedure has been repeatedly executed, that is, when the current time reaches the time point t3 of Fig. 3, the learning value GK1 of the clutch off point is determined based on the count value of the rotation drop counter and the N clutch operating positions CR, which have been stored in step S103 (Fig. 2), and memorized by the electronic control unit 30 (step S106). Specifically, the clutch operating position CR ("CR3" in the example illustrated in Fig. 3) that highly likely has been detected at the time (the time point t1 of Fig. 3) traced back from the drop timing (the time point t2 of Fig. 2) by the amount corresponding to the delay is selected from the N clutch operating positions CR (CR1, CR2, Cr3,..., CRN) based on the count value of the rotation drop counter. The selected clutch operating position CR is memorized as the learning value GK1. The electronic control unit 30 stores, in advance, the relationship between the count value of the rotation drop counter and the clutch operating position CR to be selected. The clutch operating position CR to be selected is identified with reference to the relationship. Specifically, as the count value of the rotation drop counter becomes greater, the clutch operating position CR detected at a time closer to the drop timing is selected as the value that highly likely has been detected at the aforementioned time.

In the present embodiment, as has been described, the value detected at the appropriate time is selected from the N clutch operating positions CR, which are stored by the electronic control unit 30. In this manner, the clutch operating position CR detected at the time when the clutch operating position CR actually reaches the clutch off point is identified and learned as the learning value GK1.

Afterwards, the count value of the rotation drop counter is reset to "0" (step S107 in Fig. 3) and the procedure is suspended.

In the present invention, the above-described learning procedure ensures accurate determination of the clutch operating position CR detected at the time traced back from the time by which the engine speed NE has dropped in the predetermined manner by the amount corresponding to the delay, which is, in other words, the time at which the operating position of the clutch pedal 16 actually reaches the clutch off point. Further, by storing the determined clutch operating position CR as the learning value GK1 of the clutch off point, the clutch off point is learned accurately.

The learning procedure does not necessarily have to be executed in the above-described manner. That is, at the time point by which the engine speed NE has decreased with respect to the reference value of the engine speed NE by an amount greater than or less than the predetermined speed, clutch operating positions CR detected in immediate N cycles of the learning procedure may be memorized. The learning value of the clutch off point may be learned and stored based on the memorized clutch operating positions CR. However, in this case, the disadvantage described below may occur.

If the aforementioned predetermined speed is set to a small value, the delay is shortened. Accordingly, the clutch operating position CR detected at a time close to the drop time (in this case, the time by which the engine speed NE has dropped with respect to the reference engine speed by an amount greater than or less than the predetermined speed) is stored as the learning value. It is thus highly likely that an error caused in determination of the delay is small, suppressing a learning error of the learning value. However, it is more likely to be determined that the current time is the drop time. Accordingly, when the engine speed NE changes due to a factor other than operation of the clutch pedal 16, it is likely to be erroneously determined that the change of the engine speed NE has been caused by the operating position of the clutch pedal 16 that has reached the clutch off point. This increases the possibility of reduction in the learning accuracy.

Setting a great value as the aforementioned predetermined speed reduces the possibility of determination that the current time is the drop time. This decreases the possibility of the above-described erroneous determination, thus preventing the learning accuracy from decreasing. However, in this case, the delay is prolonged and a clutch operating position CR detected at a time greatly separate from the drop time is memorized as the learning value. This increases the error in determination of the delay, and the learning error may become great.

However, in the present embodiment, the clutch operating positions CR detected in the immediate N cycles of the learning procedure are stored when the difference $\Delta$NE exceeds the first speed $\alpha$. Learning of the learning value GK1 is permitted on condition that the difference $\Delta$NE exceeds the second speed $\beta$ ($\beta > \alpha$). Accordingly, when the engine speed NE decreases greatly, it is reliably determined that such drop of the engine speed NE is caused by the operating position of the clutch pedal 16 reaching the clutch off point. Learning of the learning value GK1 is permitted based on the determination. Further, the learning value GK1 is learned based on the clutch operating position CR memorized at the time when the engine speed NE drops slightly, that is, based on the clutch operating position CR at which the delay is short and the learning error is suppressed. Accordingly, the learning value GK1 of the clutch off point is learned accurately.

The present embodiment has the following advantages.

(1) The electronic control unit 30, which functions as learning means, memorizes change of the clutch operating position CR at the time when the clutch pedal 16 is being operated, and determines the delay based on the indicator value of the changing speed of the clutch operating position CR. The electronic control unit 30 then identifies the clutch operating position CR at the time traced back from the drop time by the amount corresponding to the delay with reference to the change of the clutch operating position CR stored by the electronic control unit 30. This ensures accurate determination of the clutch operating position CR corresponding to the clutch off point. The clutch operating position CR is learned and stored as the learning value GK1 of the clutch off point.

(2) When the difference $\Delta$NE becomes greater than or equal to the first speed $\alpha$, the clutch operating positions CR detected in the immediate N cycles of the learning procedure are memorized. Accordingly, by selecting the clutch operating position CR detected at the appropriate time from the stored N clutch operating positions CR, the clutch operating position CR detected at the time point when the clutch operating position CR actually reaches the clutch off point is identified. The identified clutch operating position CR is then learned and memorized as the learning value GK1.

(3) When the difference ΔNE exceeds the first speed α, the clutch operating positions CR detected in the immediate N cycles of the learning procedure are stored. Learning of the learning value GK1 is permitted on condition that the difference ΔNE becomes greater than or equal to the second speed β. Accordingly, when the engine speed NE drops greatly, it is reliably determined that such drop of the engine speed NE is caused by the fact that the operating position of the clutch pedal 16 has reached the clutch off point. Learning of the learning value GK1 is permitted based on this determination. Further, such learning is carried out based on the clutch operating position CR at which the delay is short and the learning error is suppressed. As a result, the learning value GK1 of the clutch off point is learned accurately.

(4) The count value of the rotation drop counter is used as the indicator value of the changing speed of the clutch operating position CR. Accordingly, the delay is determined using the value highly correlated with the operating speed of the clutch pedal 16 at the time when the clutch operating position CR reaches the clutch off point. This ensures accurate learning of the learning value GKI of the clutch off point.

A second embodiment will now be described which is not covered by the claims. Same or like reference numerals are given to components of the second embodiment that are the same as or like corresponding components of the first embodiment. Some or all of illustrations and explanations of such components will be omitted.

In the second embodiment, the content of the learning procedure is different from the content of the learning procedure of the first embodiment.

First, the learning procedure of the second embodiment will be explained schematically.

The change amount of the clutch operating position CR in a certain period of time varies in correspondence with the changing speed of the clutch operating position CR in this period. Accordingly, the change amount of the clutch operating position CR in the above-described delay changes in correspondence with the changing speed of the clutch operating position CR.

Accordingly, in the second embodiment, a learning value GK2 of the clutch off point is learned based on the clutch operating position CR at the time (the drop time) by which the engine speed NE has dropped in the predetermined manner and the indicator value of the changing speed of the clutch operating position CR. In this manner, the change amount of the clutch operating position CR in the delay is obtained using the indicator value of the changing speed of the clutch operating position CR (which is, specifically, the count value of the rotation count value). By reflecting the change amount in the clutch operating position CR detected at the drop time, the clutch operating position CR at the time when the actual operating position of the clutch pedal 16 reaches the clutch off point is determined accurately. The clutch operating position CR is learned as the learning value GK2 of the clutch off point.

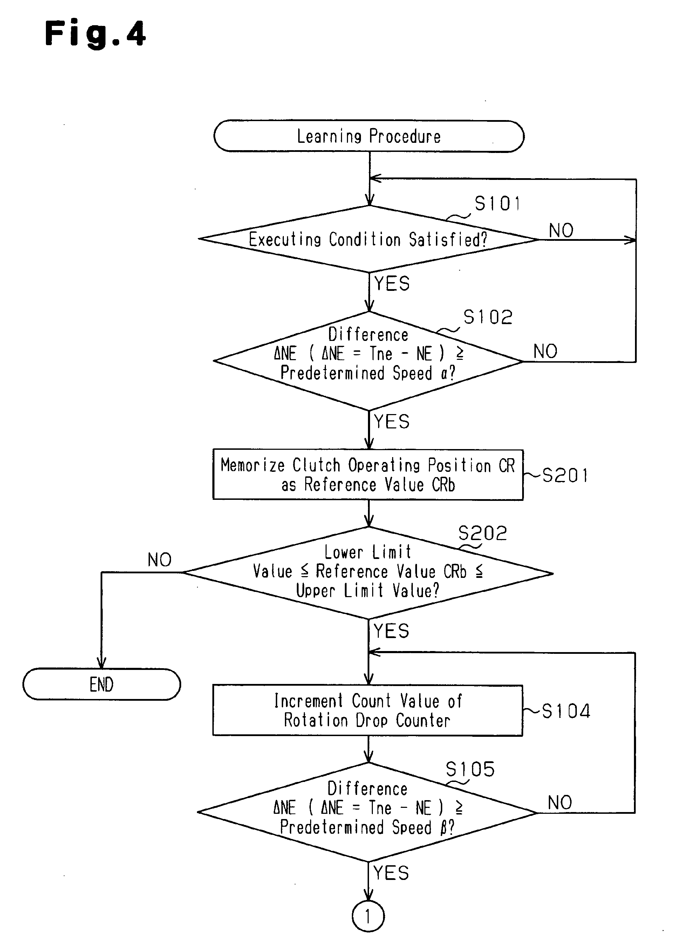

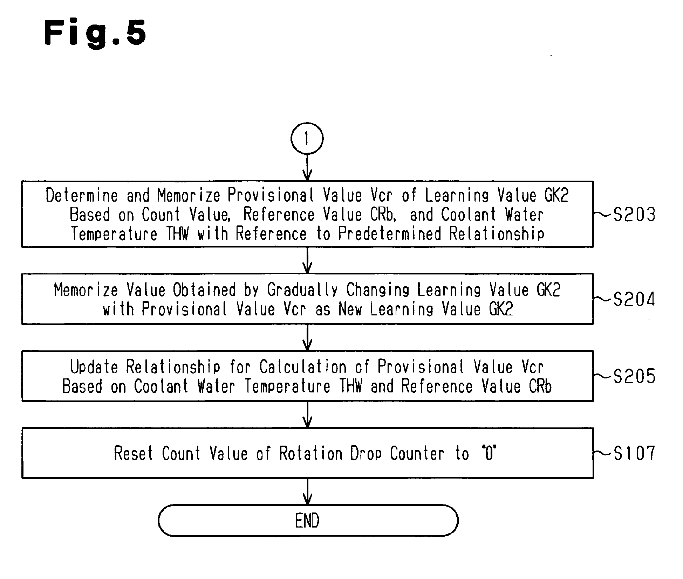

The learning procedure according to the present embodiment will now be explained in detail with reference to Figs. 4 and 5.

Figs. 4 and 5 are flowcharts each representing steps of the learning procedure. The series of procedure illustrated in each of the flowcharts schematically represents steps of the learning procedure. The actual procedure is carried by the electronic control unit 30 as interrupt processing at predetermined cycles. Same or like reference numerals are given to steps of the procedure illustrated in each of Figs. 4 and 5 that are the same as or like corresponding steps of the learning procedure of the first embodiment, which is illustrated in Fig. 2. Detailed description of these steps will be omitted.

As illustrated in Fig. 4, first in this procedure, when the executing condition is satisfied (YES in step S101) and the difference ΔNE (ΔNE = Tne - NE) between the target speed Tne and the engine speed NE becomes greater than or equal to the first speed α (YES in step S102), the clutch operating position CR at the current time is detected and memorized by the electronic control unit 30 as a reference value CRb (step S201).

It is then determined whether the reference value CRb is greater than or equal to a lower limit value and smaller than or equal to an upper limit value (step S202). With reference to the lower limit value and the upper limit value, it is accurately determined that the difference between the clutch operating position CR (the reference position) corresponding to the clutch off point of a standard vehicle, which is still free from changes over time, and the reference value CRb is abnormally great, that is, that the reference value CRb is an abnormal value that highly likely lowers the learning accuracy of the learning value GK2 of the clutch off point. The upper limit value and the lower limit value are determined in advance based on the result of experiments or simulations, and stored by the electronic control unit 30.

When the reference value CRb is less than the lower limit value or exceeds the upper limit value (NO in step S202), it is determined that, if the learning value GK2 is learned based on the reference value CRb, it is highly likely that the learning accuracy of the learning value GK2 is decreased. Accordingly, the learning procedure is suspended without performing the subsequent steps. In other words, learning and updating of the learning value GK2 is inhibited in this case. This prevents the learning accuracy of the learning value GK2 from being lowered.

Contrastingly, when the reference value CRb is greater than or equal to the lower limit value and smaller than or equal to the upper limit value (YES in step S202), the count value of the rotation drop counter is incremented repeatedly (step S104) each time the learning procedure is carried out until the difference ΔNE becomes greater than or equal to the second speed β.

Then, when the difference ΔNE becomes greater than or equal to the second speed β (YES in step S105) after the learning procedure is repeatedly executed, a provisional value Vcr of the learning value GK2 is calculated based on the count value of the rotation drop counter, the reference value CRb, and the coolant water temperature THW with reference to a predetermined relationship (step S203 of Fig. 5).

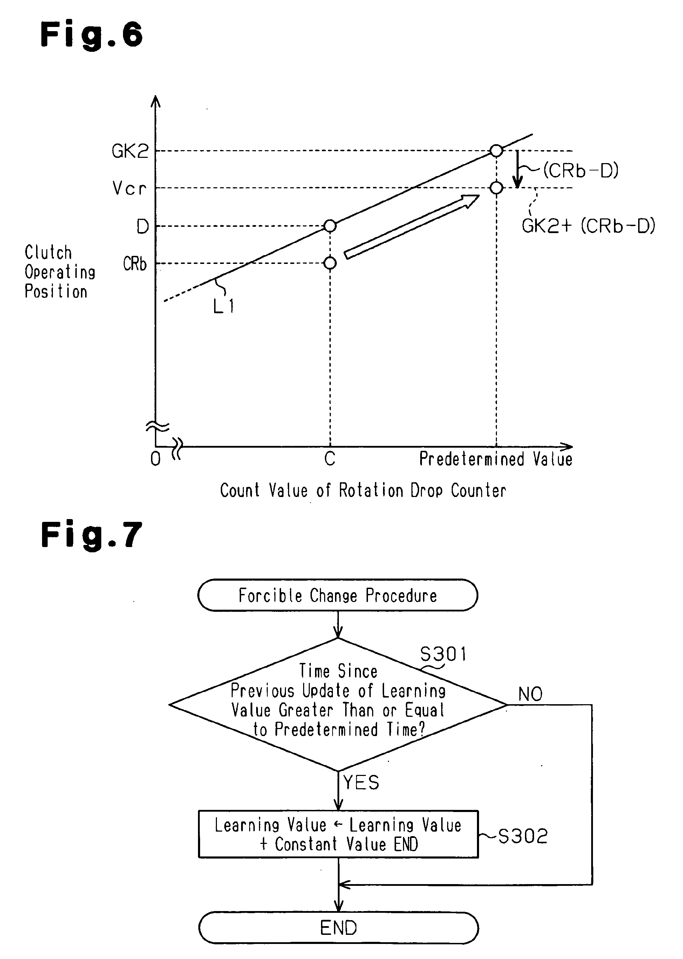

The predetermined relationship is the relationship among the reference value CRb, the count value of the rotation drop counter, and the learning value GK2, which is represented by the linear function L1 passing through the learning value GK2, as illustrated by way of example in Fig. 6. The relationship is stored in advance by the electronic control unit 30. The relationship, which is represented by the linear function L1, is updated based on the current reference value CRb (step S205 of Fig. 5, which will be described later) each time the learning value GK2 is learned. The relationship is updated by determining a linear function L1 having a minimum difference with respect to reference values CRb that have been stored in immediate cycles of a predetermined number (for example, several tens of cycles) using the least squares method. By updating the relationship each time the learning value GK2 is learned, the relationship is allowed to reflect the relationship between the reference values CRb stored in the immediate predetermined period and the learning values GK2 learned based on the reference values CRb.

When the engine 11, the transmission 15, or the clutch mechanism 14 changes over time, for example, when friction changes or wear occurs in these components, the relationship among the reference value CRb, the count value of the rotation drop counter, and the actual clutch off point may correspondingly changes. In the present embodiment, the relationship with reference to which the provisional value Vcr is calculated is updated based on the reference value CRb each time the learning value GK2 is learned. Accordingly, the relationship is corrected to be a suitable relationship corresponding to the actual condition. The provisional value Vcr is calculated based on the corrected relationship so that a suitable value is obtained as the provisional value Vcr in correspondence with the degree of the change over time and the individual differences of the vehicle 10.

When the aforementioned relationship is updated in step S205, which will be described later, the reference value CRb is not used directly, but a value obtained by converting the reference value CRb to a value at the time when the indicator value (in the present embodiment, the coolant water temperature THW) of the temperature of the clutch disk 17 is a reference temperature (for example, 80°C) is used. In this manner, the relationship becomes the relationship among the reference value CRb, the count value of the rotation drop counter, and the learning value GK2 at the time when the coolant water temperature THW is the reference temperature.

First in step S203, correction coefficients K1, K2, which are related to values "A" and "B" of the linear function "Y = AX + B" stored as the aforementioned relationship are corrected, are calculated based on the coolant water temperature THW with reference to a map. Using the correction coefficients K1, K2, the aforementioned relationship suitable for the reference temperature is corrected to the relationship suitable for the current coolant water temperature THW. The relationship between the correction coefficients K1, K2, using which the aforementioned correction of the relationship is achieved optimally, and the coolant water temperature THW is determined in advance based on the results of experiments or simulations, and stored as the map. The correction of the relationship is carried out by multiplying the value "A" by the correction coefficient K1, and multiplying the value "B" by the correction coefficient K2. In this manner, a new relationship "Y = (A × K1)X + (B × K2)" is determined.

Then, based on the corrected relationship, the provisional value Vcr is calculated. Specifically, the value ("D" in the example illustrated in Fig. 6) corresponding to the reference value CRb is calculated based on the count value ("C" in the example of the drawing) of the rotation drop counter at the current time point, with reference to the relationship that has been corrected in terms of the temperature (the relationship represented by line L1 in Fig. 6). The difference (CRb - D) between the value D and the currently stored reference value CRb is then calculated. Further, the value obtained by adding the difference (CRb - D) to the learning value GK2 is obtained as the provisional value Vcr.

When the temperature of the clutch disk 17 changes, the friction coefficient of the clutch disk 17 changes. Correspondingly, the relationship among the reference value CRb, the count value of the rotation drop counter, and the actual clutch off point changes. In the present embodiment, the relationship suitable for the reference temperature, using which the reference value CRb is calculated, is corrected to the relationship suitable for the current temperature of the clutch disk 17. The provisional value Vcr is obtained based on the corrected relationship. In this manner, the relationship suitable for the reference temperature is corrected to the relationship suitable for the actual condition, and the value suitable for the temperature of the clutch disk 17 is obtained as the provisional value Vcr with reference to the corrected relationship. Also, by setting the map used in calculation of the correction coefficients K1, K2 with the temperature characteristics of the friction resistance of the engine 11 and the transmission 15, and the temperature characteristics of output signals of the clutch pedal position sensor 33 taken into consideration, the provisional value Vcr is determined in such a manner as to compensate for the influence by change of the friction or change of the output of the clutch pedal position sensor 33.

After the provisional value Vcr is obtained in the above-described manner, the value obtained by subjecting the currently stored learning value GK2 to gradual change procedure the provisional value Vcr is memorized as a new learning value GK2 (step S204 of Fig. 5). Specifically, the currently stored learning value is defined as "GK2[i-1]" and a predetermined gradual change coefficient (>1.0) is defined as "KJ", the most recent learning value GK2[i] is calculated based on the provisional value Vcr using the expression (1) described below:

$$GK2[i] = GK2[i - 1] + (Vcr - GK2[i - 1])/KJ \ … \ (1)$$

By determining the learning value GK2 in this manner, a steep change of the learning value GK2 is suppressed compared to cases in which the provisional value Vcr is memorized as the learning value GK2. Accordingly, even when a value greatly different from the stored learning value GK2, which is a value that may decrease the learning accuracy of the learning value GK2, is detected as the provisional value Vcr, the learning accuracy of the learning value GK2 is prevented from being lowered by such detection.

The procedure of the present embodiment uses, as the gradual change coefficient KJ of the expression (1), a value that is calculated based on the time that has elapsed since the previous update of the learning value GK2 (which is, specifically, the integrated operating time of the engine 11) with reference to the map. By variably setting the gradual change coefficient KJ in this manner, the change amount of the learning value GK2 is increased as the time that has elapsed since the previous update of the learning value GK2 is prolonged, that is, as the degree of the predicted actual change of the clutch off point is increased. Accordingly, the learning value GK2 is learned appropriately in correspondence with the actual changing tendency of the clutch off point. Further, the relationship between the time that has elapsed since the previous update of the learning value GK2 and the gradual change coefficient KJ suitable for the elapsing time is determined in advance based on the result of experiments or simulations, and stored in the map. Also, through a procedure executed independently from the learning procedure, the electronic control unit 30 measures the time since the previous update of the learning value GK2 and memorizes the time.

After the learning value GK2 is updated in this manner, the relationship suitable for the reference temperature, which is used in calculation of the provisional value Vcr, is updated based on the coolant water temperature THW, the reference value CRb, and the count value of the rotation drop counter (step S205). Further, the count value of the rotation drop counter is reset to "0" (step S107) and the learning procedure is suspended.

The present embodiment has the advantages described below.

(1) By obtaining the change amount of the clutch operating position CR in the delay with reference to the count value of the rotation drop counter and reflecting the change amount in the reference value CRb, the clutch operating position CR at the time when the clutch operating position CR actually reaches the clutch off point is accurately determined as the provisional value Vcr. This ensures accurate learning of the learning value GK2 of the clutch off point based on the provisional value Vcr.

(2) The provisional value Vcr of the learning value GK2 is calculated with reference to the relationship among the reference value CRb, the count value of the rotation drop counter, and the learning value GK2, which is memorized in advance.

(3) In order to calculate the provisional value Vcr, the linear function is updated based on the reference value CRb each time the learning value GK2 is learned. Accordingly, the relationship represented by the linear function is corrected to be suitable for the actual condition. By calculating the provisional value Vcr based on the corrected relationship, a suitable value is calculated as the provisional value Vcr in correspondence with the degree of the change over time and the individual differences of the vehicle 10.

(4) When the difference ΔNE exceeds the first speed α, the current clutch operating position CR is memorized as the reference value CRb. Learning of the learning value GK2 based on the reference value CRb is permitted on condition that the difference ΔNE exceeds the second speed β. Accordingly, when the engine speed NE drops greatly, it is reliably determined that such drop of the engine speed NE has been caused by the fact that the operating position of the clutch pedal 16 reached the clutch off point. Learning of the learning value GK2 is permitted based on the determination. Further, the learning value GK2 is learned based on the clutch operating position CR at which the delay is short and the learning error is suppressed. This ensures accurate learning of the learning value GK2 of the clutch off point.

(5) The count value of the rotation drop counter is used as the indicator value of the changing speed of the clutch operating position CR. Accordingly, the delay is determined using the value highly correlated with the operating speed of the clutch pedal 16 at the time when the operating position of the clutch pedal 16 reaches the clutch off point. This ensures accurate learning of the learning value GK2 of the clutch off point.

(6) For calculation of the provisional value Vcr, the linear function suitable for the reference temperature is corrected based on the current coolant water temperature THW. The relationship suitable for the reference temperature is thus corrected to be suitable for the actual condition. Accordingly, by calculating the provisional value Vcr based on the corrected relationship, a suitable value is obtained as the provisional value Vcr in correspondence with the temperature of the clutch disk 17.

(7) When the reference value CRb is smaller then the lower limit value or greater than the upper limit value and the learning value GK2 is learned based on the reference value CRb, the possibility that the learning accuracy of the learning value GK2 will decrease is high. Accordingly, in this case, learning and updating of the learning value GK2 is inhibited. This prevents the learning accuracy of the learning value GK2 from decreasing.

(8) The value obtained by subjecting the stored learning value GK2 to the gradual change procedure using the provisional value Vcr is learned and memorized as the new learning value GK2. Accordingly, even when a value greatly different from the stored learning value GK2, which may lower the learning accuracy of the learning value GK2, is detected as the provisional value Vcr, the learning accuracy of the learning value GK2 is prevented from being reduced by such detection. Further, the value calculated based on the time that has elapsed since the previous update of the learning value GK2 is used as the gradual change coefficient KJ of the expression (1), which is employed in the gradual change procedure of the learning value GK2. Accordingly, as the degree of the predicted actual change of the clutch off point becomes greater, the change amount of the learning value GK2 becomes greater. The learning value GK2 is thus learned appropriately in correspondence with the actual tendency of change of the clutch off point.

The above described embodiments may be modified as follows.

In the first embodiment, as parameters used in the step (step S106 of Fig. 2) for determining the learning value GK1 of the clutch off point, the coolant water temperature THW as the indicator value of the temperature of the clutch disk 17 may be used in addition to the count value of the rotation drop counter and the stored N clutch operating positions CR. In this manner, the learning value GK1 of the clutch off point is learned in correspondence with change of the relationship among the drop time, the count value of the rotation drop counter, and the actual clutch off point, which is caused by change of the temperature of the clutch disk 17. This ensures further accurate learning of the learning value GK1.

In the first embodiment, when the difference between the stored N clutch operating positions CR and the reference position is great, learning and updating of the learning value GK1 may be inhibited. In this manner, even if abnormal values that are highly likely to lower the learning accuracy of the learning value GK1 are stored as the N clutch operating positions CR, the learning accuracy of the learning value GK1 is prevented from being lowered by the abnormal values. It is determined that the aforementioned difference is great when the clutch operating position CR identified as the value that highly likely has been detected at the time traced back from the drop time by the amount corresponding to the delay (step S106 of Fig. 2) is greater than the upper limit value or smaller than the lower limit value. Alternatively, if any one of the stored N clutch operating positions CR is greater than the upper limit value or smaller than the lower limit value, it may be determined that the aforementioned difference is great.

In the first embodiment, the clutch operating position CR identified as the value that highly likely has been detected at the time traced back from the drop time by the amount corresponding to the delay is learned and memorized as the learning value GK1. Instead, the value obtained by subjecting the stored learning value GK1 to gradual change procedure using the above-described identified clutch operating position CR may be learned and memorized as a new learning value GK1. In this manner, even when a value greatly different from the stored learning value GK1, which may decrease the learning accuracy of the learning value GK1, is identified as the clutch operating position CR corresponding to the clutch off point, the learning accuracy of the learning value GK1 is prevented from being lowered by such identification. The gradual change procedure of the learning value GK1 may be carried out by, for example, calculating a most recent learning value GK1 using an expression similar to the above-described expression (1).

Further, the degree of the above-described gradual change of the learning value GK1 may be set in correspondence with the time that has elapsed since the previous update of the learning value GK1. In this manner, as the time that has elapsed since the previous update of the learning value GK1 becomes greater, that is, as the degree of the predicted actual change of the clutch off point becomes greater, the change amount of the learning value GK1 becomes greater. This ensures appropriate learning of the learning value GK1 in correspondence with the tendency of the actual change of the clutch off point.

In the first embodiment, a suitable value is identified from the stored N clutch operating positions CR, and learned and memorized as the learning value GK1. Instead, change of the clutch operating position CR detected in a predetermined period immediately before the drop time may be converted into an expression and the expression may be stored. Further, based on the expression, the value corresponding to the clutch operating position CR at the time traced back from the drop time by the amount corresponding to the delay may be determined. The obtained value is learned and memorized as the learning value GK1.

In the second embodiment, the temperature of lubricant oil in the engine 11 or the transmission 15 may be used as the indicator value of the temperature of the clutch disk 17, instead of the coolant water temperature THW. Alternatively, the temperature of the clutch disk 17 may be directly detected and used as the indicator value of the temperature of the clutch disk 17.

In the second embodiment, the provisional value Vcr of the learning value GK2 is calculated based on the count value of the rotation drop counter, the reference value CRb, and the coolant water temperature THW. Instead, the provisional value Vcr of the learning value GK2 may be determined based on only the count value of the rotation drop counter and the reference value CRb.

In the second embodiment, learning and updating of the learning value GK2 are inhibited when the reference value CRb is greater than the upper limit value or smaller than the lower limit value. Instead, such learning and updating may be inhibited when the provisional value Vcr is greater than an upper limit value or smaller than a lower limit value. In this manner, even when an abnormal value that is likely to decrease the learning accuracy of the learning value GK2 is obtained as the provisional value Vcr, the learning accuracy of the learning value GK2 is prevented from being reduced by the abnormal value.

In the second embodiment, the upper limit value and the lower limit value may be set variably in correspondence with the count value of the rotation drop counter. In this case, for example, as the count value of the rotation drop counter becomes greater, values corresponding to smaller depression amounts of the clutch pedal 16 are set to the upper limit value and the lower limit value. Alternatively, the lower limit value and the upper limit value may be set in correspondence with the relationship used in calculation of the provisional value Vcr. In this case, the value obtained by adding a constant predetermined value to the value corresponding to the reference value CRb in this relationship may be set to the upper limit value. The value obtained by subtracting the predetermined value from the value corresponding to the reference value CRb in the relationship is set to the lower limit value.

In the second embodiment, instead of the integrated operating time of the engine 11, the number of times by which operation of the engine 11 is stopped through manipulation of the drive switch or the integrated value of the engine speed NE may be employed as the parameter for calculation of the gradual change coefficient KJ. Specifically, any suitable value may be used as the parameter for the calculation as long as the value is highly correlated with the time that has elapsed since the previous update of the learning value GK2.

In the second embodiment, a constant predetermined value may be set to the gradual change coefficient KJ.

In the second embodiment, the gradual change procedure of the learning value GK2 may be omitted. Specifically, a value corresponding to the provisional value Vcr, which is determined in step S203 of Fig. 5, may be learned and memorized as the learning value GK2.

In the second embodiment, the updating procedure (step S205 of Fig. 5) of the relationship used for calculation of the provisional value Vcr may be omitted. In this case, an expression or a map defining the relationship among the count value of the rotation drop counter, the reference value CRb, the coolant water temperature THW, and the provisional value Vcr is set in advance as the linear function used for calculating the provisional value Vcr. The expression or the map may be set by determining the relationship between a detecting condition, which is defined by the count value of the rotation drop counter, the reference value CRb, and the coolant water temperature THW, and the provisional value Vcr suitable for the detecting condition based on the result of experiments or simulations in advance.

In the second embodiment, any suitable function or expression other than a linear function may be used as the relationship used for calculation of the provisional value Vcr. Further, a map using the count value of the rotation drop counter, the reference value CRb, and the coolant water temperature THW as calculation parameters may be set as such relationship.

In each of the above described embodiments, the learning value (GK1 or GK2) of the clutch off point may be forcibly changed when the learning value (GK1 or GK2) is not updated for more than a predetermined duration. In this manner, even when the learning value (GK1 or GK2) is not learned or updated for an extended period, the learning value (GK1 or GK2) is changed in correspondence with the actual change amount of the clutch off point that is predicted to have been caused in the predetermined duration, which is the period in which learning is suspended. This reduces the error between the learning value (GK1 or GK2) and the clutch operating position CR corresponding to the actual clutch off point.

Fig. 7 is a flowchart representing an example of a procedure of forcibly changing the learning value (a forcible change procedure). With reference to the flowchart, when the time that has elapsed since the previous update of the learning value (GK1 or GK2) is greater than or equal to a predetermined value (YES in step S301), a constant value is added to the learning value (GK1 or GK2) (step S302). As the aforementioned time, the integrated operating time of the engine 11, the number of times by which operation of the engine 11 has been stopped through manipulation of the drive switch, or the integrated value of the engine speed NE may be employed.

In each of the embodiments, any suitable value highly correlated with the changing speed of the clutch operating position CR may be used as the indicator value of the clutch operating position CR, instead of the count value of the rotation drop counter. Alternatively, the changing speed of the clutch operating position CR detected by the clutch pedal position sensor 33 may be used directly as the indicator value of the changing speed of the clutch operating position CR.

In each embodiment, storage of the clutch operating position CR and learning of the learning value (GK1 or GK2) may be both carried out when the difference ΔNE exceeds a predetermined value.

The present invention is not restricted to use in a vehicle performing automatic stop/start control. The invention may be used in a vehicle that controls its operation with reference to the operating position of a clutch operating member (which is, for example, a movable portion of an actuator for actuating a clutch mechanism), specifically, in a vehicle in which the clutch off point must be obtained accurately, such as a vehicle that automatically switches the operating state of the clutch mechanism.

**Claims**

1. A learning apparatus of an operating position of a clutch operating member (16) operated to switch an operating state of a clutch mechanism (14) arranged between an input shaft (15a) of a transmission (15) having a plurality of gears and an output shaft (12) of an internal combustion engine (11), the apparatus comprising:

   detection means (33) for detecting the operating position of the clutch operating member (16); and
   learning means (30) for learning, as a learning value, a clutch off point, the clutch off point being the operating position of the clutch operating member (16) at a time point at which the operating state of the clutch mechanism (14) is switched from a disengaged state to an engaged state on condition that operation of the clutch operating member (16) has been started so as to change the operating state of the clutch mechanism (14) from the disengaged state to the engage state when a rotational speed of the output shaft (12) is stable,

   wherein the learning means (30) learns the clutch off point based on a drop time, which is a time at which the rotational speed of the output shaft (12) drops in a predetermined manner when the clutch operating member (16) is being operated, the operating position of the clutch operating member (16) detected by the detection means (33) when the clutch operating member (16) is being operated, and an indicator value of a changing speed of the operating position of the clutch operating member (16) when the clutch operating member (16) is being operated,
   wherein the learning apparatus memorizes the drop time and change of the operating position of the clutch operating member (16) detected by the detection means (33) when the clutch operating member (16) is being operated, and calculates a trace back period based on the indicator value, wherein, based on the memorized change of the operating position, the learning means (30) identifies the operating position of the clutch operating member (16) at a time traced back from the drop time by an amount corresponding to the trace back period, and learns the identified operating position as the learning value.

2. The learning apparatus according to claim 1, **characterized in that** the detection means (33) detects the operating position of the clutch operating member (16) at predetermined cycles,
   wherein the learning means (30) memorizes, as the change of the operating position of the clutch operating member (16), a plurality of operating positions detected by the detection means (33) before the drop time.

3. The learning apparatus according to claim 1, **characterized in that**, when the clutch operating member (16) is being operated, the learning means (30) learns the clutch off point as the learning value based on the operating position detected by the detection means (33) at the drop time and the indicator value.

4. The learning apparatus according to claim 3, **characterized in that** the learning means (30) stores in advance a relationship among the operating position detected by the detection means (33) at the drop time, the indicator value, and the learning value, and calculates the learning value with reference to the relationship.

5. The learning apparatus according to claim 4, **characterized in that**, each time the operating position of the clutch operating member (16) is detected by the detection means (33) at the drop time of the rotational speed of the output shaft (12), the relationship among the operating position, the indicator value, and the learning value is updated based on the detected operating position.

6. The learning apparatus according to any one of claims 1 to 5, **characterized in that** the learning means (30) determines that the rotational speed of the output shaft (12) has dropped in the predetermined manner on condition that the rotational speed of the output shaft (12) has become smaller than a predetermined reference speed by an amount greater than a first speed, and wherein the learning means (30) permits learning of the clutch off point on condition that the rotational speed of the output shaft (12) has become smaller than the reference speed by an amount greater than a second speed, which is greater than the first speed.

7. The learning apparatus according to any one of claims 1 to 6, **characterized in that** the indicator value is a drop amount of the rotational speed of the output shaft (12) in a predetermined period immediately after the drop time.

8. The learning apparatus according to any one of claims 1 to 7, **characterized in that** the learning means (30) performs learning of the learning value based on an indicator value of a temperature of a friction plate (17) of the clutch mechanism (14).

9. The learning apparatus according to any one of claims 1 to 8, **characterized in that**, when the difference between the operating position of the clutch operating member (16) detected by the detection means (33) when the clutch operating member (16) is being operated and a reference position of the operating position of the clutch operating member (16) is greater than a predetermined value, the learning means (30) inhibits learning of the clutch off point based on the operating position of the clutch operating member (16).

10. The learning apparatus according to any one of claims 1 to 9, **characterized in that**, after learning of the learning value has not been executed for a predetermined period or longer, the learning means (30) forcibly changes the learning value.


**Patentansprüche**

1. Lernvorrichtung zum Lernen einer Betätigungsposition eines Kupplungsbetätigungselements (16), das zum Schalten eines Betätigungszustands eines Kupplungsmechanismus (14) betätigt wird, der zwischen einer Eingangswelle (15a) eines Getriebes (15), das eine Mehrzahl von Zahnrädern aufweist, und einer Ausgangswelle (12) einer Brennkraftmaschine (11) angeordnet ist, wobei die Vorrichtung aufweist:

   eine Erfassungseinrichtung (33) zum Erfassen der Betätigungsposition des Kupplungsbetätigungselements (16); und
   eine Lerneinrichtung (30) zum Lernen eines Kupplungsabschaltpunkts als einen Lernwert, wobei der Kupplungsabschaltpunkt die Betätigungsposition des Kupplungsbetätigungselements (16) zu einem Zeitpunkt ist, zu dem der Betätigungszustand des Kupplungsmechanismus (14) von einem außer Eingriff befindlichen Zustand in einen in Eingriff befindlichen Zustand unter der Bedingung umgeschaltet wird, dass die Betätigung des Kupplungsbetätigungselements (16) dahingehend begonnen worden ist, dass der Betätigungszustand des Kupplungsmechanismus (14) von dem außer Eingriff befindlichen Zustand in den in Eingriff befindlichen Zustand geändert wird, wenn eine Drehzahl der Ausgangswelle (12) stabil ist,
   wobei die Lerneinrichtung (30) den Kupplungsabschaltpunkt auf der Basis einer Abfallzeit, die eine Zeit ist, zu der die Drehzahl der Ausgangswelle (12) in einer vorbestimmten Weise abfällt, wenn das Kupplungsbetätigungselement (16) betätigt wird, der Betätigungsposition des Kupplungsbetätigungselements (16), die durch die Erfassungseinrichtung (33) erfasst wird, wenn das Kupplungsbetätigungselement (16) betätigt wird, und eines Indikatorwerts einer sich ändernden Drehzahl bzw. Geschwindigkeit der Betätigungsposition des Kupplungsbetätigungselements (16), wenn das Kupplungsbetätigungselement (16) betätigt wird, lernt,
   wobei die Lerneinrichtung die Abfallzeit und die Änderung der Betätigungsposition des Kupplungsbetätigungselements (16), die durch die Erfassungseinrichtung (33) erfasst wird, wenn das Kupplungsbetätigungselements (16) betätigt wird, speichert und eine Rückverfolgungsperiode auf der Basis des Indikatorwerts berechnet, wobei die Lerneinrichtung (30) auf der Basis der gespeicherten Änderung der Betätigungsposition die Betätigungsposition des Kupplungsbetätigungselements (16) zu einem Zeitpunkt identifiziert, der gegenüber der Abfallzeit um eine Größe zurückverfolgt bzw. zurückgeführt ist, die der Rückverfolgungsperiode entspricht, und die identifizierte Arbeitsposition als den Lernwert lernt.

2. Lernvorrichtung nach Anspruch 1, **dadurch gekennzeichnet, dass** die Erfassungseinrichtung (33) die Betätigungsposition des Kupplungsbetätigungselements (16) bei vorbestimmten Zyklen detektiert,
wobei die Lerneinrichtung (30) als die Änderung der Betätigungsposition des Kupplungsbetätigungselements (16) eine Mehrzahl von Betätigungspositionen speichert, die durch die Erfassungseinrichtung (33) vor der Abfallzeit detektiert wurden.

3. Lernvorrichtung nach Anspruch 1, **dadurch gekennzeichnet, dass** die Lerneinrichtung (30) dann, wenn das Kupplungsbetätigungselement (16) betätigt wird, den Kupplungsabschaltpunkt als den Lernwert auf der Basis der Betätigungsposition, die durch die Erfassungseinrichtung (33) zu dem Abfallzeitpunkt detektiert wird, und des Indikatorwerts lernt.

4. Lernvorrichtung nach Anspruch 3, **dadurch gekennzeichnet, dass** die Lerneinrichtung (30) eine Beziehung zwischen der Betätigungsposition, die durch die Erfassungseinrichtung (33) zu der Abfallzeit detektiert wird, dem Indikatorwert und dem Lernwert vorab speichert, und den Lernwert unter Bezugnahme auf die Beziehung berechnet.

5. Lernvorrichtung nach Anspruch 4, **dadurch gekennzeichnet, dass** die Beziehung zwischen der Betätigungsposition, dem Indikatorwert und dem Lernwert jedes Mal dann, wenn die Betätigungsposition des Kupplungsbetätigungselements (16) durch die Erfassungseinrichtung (33) zu der Abfallzeit der Drehzahl der Ausgangswelle (12) detektiert wird, auf der Basis der erfassten Betätigungsposition aktualisiert wird.

6. Lernvorrichtung nach einem der Ansprüche 1 bis 5, **dadurch gekennzeichnet, dass** die Lerneinrichtung (30) bestimmt, dass die Drehzahl der Ausgangswelle (12) in einer vorbestimmten Weise unter der Bedingung abgefallen ist, dass die Drehzahl der Ausgangswelle (12) um eine Größe, die größer ist als eine erste Drehzahl, kleiner geworden ist als eine vorbestimmte Referenzdrehzahl, und bei der die Lerneinrichtung (30) das Lernen des Kupplungsabschaltpunkts unter der Bedingung zulässt, dass die Drehzahl der Ausgangswelle (12) um einen Betrag, der größer ist als eine zweite Drehzahl, die größer ist als die erste Drehzahl, kleiner als die Referenzdrehzahl geworden ist.

7. Lernvorrichtung nach einem der Ansprüche 1 bis 6, **dadurch gekennzeichnet, dass** der Indikatorwert eine Größe des Abfallens der Drehzahl der Ausgangswelle (12) in einer vorbestimmten Periode unmittelbar nach der Abfallzeit ist.

8. Lernvorrichtung nach einem der Ansprüche 1 bis 7, **dadurch gekennzeichnet, dass** die Lerneinrichtung (30) das Lernen des Lernwerts auf der Basis eines Indikatorwerts einer Temperatur einer Reibungsplatte (17) des Kupplungsmechanismus (14) durchführt.

9. Lernvorrichtung nach einem der Ansprüche 1 bis 8, **dadurch gekennzeichnet, dass** die Lerneinrichtung (30) das Lernen des Kupplungsabschaltpunkts auf der Basis der Betätigungsposition des Kupplungsbetätigungselements (16) dann sperrt, wenn die Differenz zwischen der Betätigungsposition des Kupplungsbetätigungselements (16), die durch die Erfassungseinrichtung (33) detektiert wird, wenn das Kupplungsbetätigungselement (16) betätigt wird, und einer Referenzposition der Betätigungsposition des Kupplungsbetätigungselements (16) größer ist als ein vorbestimmter Wert.

10. Lernvorrichtung nach einem der Ansprüche 1 bis 9, **dadurch gekennzeichnet, dass** die Lerneinrichtung (30) den Lernwert dann, wenn das Lernen des Lernwerts für eine vorbestimmte Zeitdauer oder länger nicht ausgeführt worden ist, zwangsweise verändert.

## Revendications

1. Appareil d'apprentissage d'une position d'actionnement d'un élément d'actionnement d'embrayage (16) actionné pour commuter un état d'actionnement d'un mécanisme d'embrayage (14) agencé entre un arbre d'entrée (15a) d'une transmission (15) ayant une pluralité d'engrenages et un arbre de sortie (12) d'un moteur à combustion interne (11), l'appareil comprenant :

un moyen de détection (33) pour détecter la position d'actionnement de l'élément d'actionnement d'embrayage (16) ; et
un moyen d'apprentissage (30) pour apprendre, en tant que valeur d'apprentissage, un point de débrayage, le point de débrayage étant la position d'actionnement de l'élément d'actionnement d'embrayage (16) à un instant auquel l'état d'actionnement du mécanisme d'embrayage (14) est commuté d'un état débrayé à un état embrayé à condition qu'un actionnement de l'élément d'actionnement d'embrayage (16) ait été démarré afin de changer l'état d'actionnement du mécanisme d'embrayage (14) de l'état débrayé à l'état embrayé lorsqu'une vitesse de rotation de l'arbre de sortie (12) est stable,

dans lequel le moyen d'apprentissage (30) apprend le point de débrayage sur la base d'un temps de chute, qui est un temps auquel la vitesse de rotation de l'arbre de sortie (12) diminue d'une manière prédéterminée lorsque l'élément d'actionnement d'embrayage (16) est actionné, de la position d'actionnement de l'élément d'actionnement d'embrayage (16) détectée par le moyen de détection (33) lorsque l'élément d'actionnement d'embrayage (16) est actionné, et d'une valeur d'indication d'une vitesse de changement de la position d'actionnement de l'élément d'actionnement d'embrayage (16) lorsque l'élément d'actionnement d'embrayage (16) est actionné, dans lequel l'appareil d'apprentissage mémorise le temps de chute et un changement de la position d'actionnement de l'élément d'actionnement d'embrayage (16) détectée par le moyen de détection (33) lorsque l'élément d'actionnement d'embrayage (16) est actionné, et calcule une durée retracée sur la base de la valeur d'indication, où, sur la base du changement mémorisé de la position d'actionnement, le moyen d'apprentissage (30) identifie la position d'actionnement de l'élément d'actionnement d'embrayage (16) à un temps retracé depuis le temps de chute par une quantité correspondant à la durée retracée, et apprend la position d'actionnement identifiée comme étant la valeur d'apprentissage.

2. Appareil d'apprentissage selon la revendication 1, **caractérisé en ce que** le moyen de détection (33) détecte la position d'actionnement de l'élément d'actionnement d'embrayage (16) à des cycles prédéterminés, dans lequel le moyen d'apprentissage (30) mémorise, en tant que changement de la position d'actionnement de l'élément d'actionnement d'embrayage (16), une pluralité de positions d'actionnement détectées par le moyen de détection (33) avant le temps de chute.

3. Appareil d'apprentissage selon la revendication 1, **caractérisé en ce que**, lorsque l'élément d'actionnement d'embrayage (16) est actionné, le moyen d'apprentissage (30) apprend le point de débrayage en tant que valeur d'apprentissage sur la base de la position d'actionnement détectée par le moyen de détection (33) au temps de chute et de la valeur d'indication.

4. Appareil d'apprentissage selon la revendication 3, **caractérisé en ce que** le moyen d'apprentissage (30) stocke à l'avance une relation entre la position d'actionnement détectée par le moyen de détection (33) au temps de chute, la valeur d'indication, et la valeur d'apprentissage, et calcule la valeur d'apprentissage en se référant à la relation.

5. Appareil d'apprentissage selon la revendication 4, **caractérisé en ce que**, chaque fois que la position d'actionnement de l'élément d'actionnement d'embrayage (16) est détectée par le moyen de détection (33) au temps de chute de la vitesse de rotation de l'arbre de sortie (12), la relation entre la position d'actionnement, la valeur d'indication, et la valeur d'apprentissage est mise à jour sur la base de la position d'actionnement détectée.

6. Appareil d'apprentissage selon l'une quelconque des revendications 1 à 5, **caractérisé en ce que** le moyen d'apprentissage (30) détermine que la vitesse de rotation de l'arbre de sortie (12) a diminué de manière prédéterminée à condition que la vitesse de rotation de l'arbre de sortie (12) devienne plus petite qu'une vitesse de référence prédéterminée d'une quantité supérieure à une première vitesse, et où le moyen d'apprentissage (30) permet l'apprentissage du point de débrayage à condition que la vitesse de rotation de l'arbre de sortie (12) devienne plus petite que la vitesse de référence d'une quantité supérieure à une deuxième vitesse, qui est supérieure à la première vitesse.

7. Appareil d'apprentissage selon l'une quelconque des revendications 1 à 6, **caractérisé en ce que** la valeur d'indication est une quantité de chute de la vitesse de rotation de l'arbre de sortie (12) pendant une durée prédéterminée immédiatement après le temps de chute.

8. Appareil d'apprentissage selon l'une quelconque des revendications 1 à 7, **caractérisé en ce que** le moyen d'apprentissage (30) effectue l'apprentissage de la valeur d'apprentissage sur la base d'une valeur d'indication d'une température d'un disque de friction (17) du mécanisme d'embrayage (14).

9. Appareil d'apprentissage selon l'une quelconque des revendications 1 à 8, **caractérisé en ce que**, lorsque la différence entre la position d'actionnement de l'élément d'actionnement d'embrayage (16) détectée par le moyen de détection (33) lorsque l'élément d'actionnement d'embrayage (16) est actionné et une position de référence de la position d'actionnement de l'élément d'actionnement d'embrayage (16) est supérieure à une valeur prédéterminée, le moyen d'apprentissage (30) empêche l'apprentissage du point de débrayage sur la base de la position d'actionnement de l'élément d'actionnement d'embrayage (16).

10. Appareil d'apprentissage selon l'une quelconque des revendications 1 à 9, **caractérisé en ce que**, après la non exécution de l'apprentissage de la valeur d'apprentissage pendant une durée prédéterminée ou plus, le moyen d'apprentissage (30) change nécessairement la valeur d'apprentissage.

# Fig.1

EP 2 394 071 B1

# Fig.2

```
            ┌─────────────────────────┐
            │   Learning Procedure     │
            └─────────────────────────┘
                       │
                       ▼
                   ╱───────╲  S101
              ╱─────────────────────╲        NO
            ╱  Executing Condition Satisfied? ╲───────────►
              ╲─────────────────────╱
                   ╲───────╱
                       │ YES
                       ▼
                   ╱───────╲  S102
              ╱─────────────────────╲        NO
            ╱       Difference        ╲───────────►
           ╱  ΔNE ( ΔNE = Tne − NE ) ≧  ╲
            ╲    Predetermined Speed α?  ╱
              ╲─────────────────────╱
                   ╲───────╱
                       │ YES
                       ▼
            ┌─────────────────────────┐
            │  Memorize Clutch Operating│  S103
            │  Positions CR of Immediate│
            │     N Execution Cycles    │
            └─────────────────────────┘
                       │
                       ▼
            ┌─────────────────────────┐
            │  Increment Count Value of │  S104
            │    Rotation Drop Counter  │
            └─────────────────────────┘
                       │
                       ▼
                   ╱───────╲  S105
              ╱─────────────────────╲        NO
            ╱       Difference        ╲───────────►
           ╱   ΔNE (ΔNE = Tne − NE) ≧   ╲
            ╲    Predetermined Speed β?  ╱
              ╲─────────────────────╱
                   ╲───────╱
                       │ YES
                       ▼
            ┌─────────────────────────┐
            │  Determine and Memorize   │  S106
            │ Learning Value GK1 Based on│
            │  Count Value and Stored N │
            │ Clutch Operating Positions CR│
            └─────────────────────────┘
                       │
                       ▼
            ┌─────────────────────────┐
            │   Reset Count Value of    │  S107
            │ Rotation Drop Counter to "0"│
            └─────────────────────────┘
                       │
                       ▼
            ┌─────────────────────────┐
            │           END            │
            └─────────────────────────┘
```

# Fig.3

Depression Amount Great

Output Signal of Clutch Pedal Position Sensor

Value Corresponding to Actual Clutch Off Point

Engine Speed NE

Tne+α
Target Speed Tne
Tne-α
Tne-β

Depression Amount Great
Clutch Operating Position CR

··· CR3 : CR2 : CR1

Learning Value GK1

Count Value of Rotation Drop Counter

0

t1   t2   t3

Time

EP 2 394 071 B1

# Fig.4

```
                        ┌──────────────────────┐
                        │  Learning Procedure  │
                        └──────────────────────┘
                                   │
                                   ▼
                          ╱─────────────────╲        S101
                         ╱  Executing Condition ╲ ─── NO ──→
                         ╲   Satisfied?         ╱
                          ╲─────────────────╱
                                   │ YES
                                   ▼
                          ╱─────────────────╲        S102
                         ╱    Difference      ╲
                        ╱ ΔNE ( ΔNE = Tne − NE ) ≧ ╲ ── NO ──→
                         ╲  Predetermined Speed α?  ╱
                          ╲─────────────────╱
                                   │ YES
                                   ▼
                    ┌──────────────────────────────┐
                    │ Memorize Clutch Operating Position CR │ ～S201
                    │      as Reference Value CRb          │
                    └──────────────────────────────┘
                                   │
                                   ▼
                          ╱─────────────────╲        S202
              ←── NO ─── ╱     Lower Limit     ╲
                        ╱ Value ≦ Reference Value CRb ≦ ╲
                         ╲   Upper Limit Value?  ╱
                          ╲─────────────────╱
            ┌───────┐              │ YES
            │  END  │              ▼
            └───────┘    ┌──────────────────────────┐
                        │   Increment Count Value of  │ ～S104
                        │   Rotation Drop Counter     │
                        └──────────────────────────┘
                                   │
                                   ▼
                          ╱─────────────────╲        S105
                         ╱    Difference      ╲
                        ╱ ΔNE ( ΔNE = Tne − NE ) ≧ ╲ ── NO ──→
                         ╲  Predetermined Speed β?  ╱
                          ╲─────────────────╱
                                   │ YES
                                   ▼
                                  ( 1 )
```

# Fig.5

①

| Determine and Memorize Provisional Value Vcr of Learning Value GK2 Based on Count Value, Reference Value CRb, and Coolant Water Temperature THW with Reference to Predetermined Relationship | ~S203 |

| Memorize Value Obtained by Gradually Changing Learning Value GK2 with Provisional Value Vcr as New Learning Value GK2 | ~S204 |

| Update Relationship for Calculation of Provisional Value Vcr Based on Coolant Water Temperature THW and Reference Value CRb | ~S205 |

| Reset Count Value of Rotation Drop Counter to "0" | ~S107 |

END

# Fig.6

Count Value of Rotation Drop Counter

# Fig.7

**EP 2 394 071 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9112587 A
- WO 2008028817 A1
- WO 2008145645 A